# EUROPÄISCHE PATENTSCHRIFT

(11) **EP 1 080 155 B1**
(45) Veröffentlichungstag und Bekanntmachung des Hinweises auf die Patenterteilung: **10.01.2007**
(21) Anmeldenummer: 99953344.1
(22) Anmeldetag: 14.05.1999
(51) Int. Cl.: C08L 77/00

(54) **COMPOUNDS AUS POLYAMID- UND PERFLUORALKYLSUBSTANZ(EN) UND MISCHUNGEN DIESER COMPOUNDS MIT WEITEREN POLYMERSUBSTANZEN, VERFAHREN ZU IHRER HERSTELLUNG UND VERWENDUNG**
COMPOUNDS MADE OF POLYAMIDE AND PERFLUOROALKYL SUBSTANCE(S) AND MIXTURES OF THESE COMPOUNDS WITH ADDITIONAL POLYMER SUBSTANCES, A METHOD FOR THE PRODUCTION THEREOF, AND THEIR USE
COMPOUNDS CONSTITUES D'UNE OU DE PLUSIEURS SUBSTANCES DU TYPE POLYAMIDE ET PERFLUOROALKYLE ET MELANGES DE CES COMPOUNDS AVEC D'AUTRES SUBSTANCES POLYMERES, LEUR PROCEDE DE PRODUCTION ET LEUR UTILISATION

(30) Priorität: 27.05.1998 DE 19823609
(43) Veröffentlichungstag der Anmeldung: 07.03.2001
(73) Patentinhaber: Leibniz-Institut für Polymerforschung Dresden e.V., 01069 Dresden (DE)
(72) Erfinder: LEHMANN, Dieter, D-01640 Coswig (DE)
(74) Vertreter: Rauschenbach, Marion
(86) Internationale Anmeldenummer: PCT/EP1999/003303
(87) Internationale Veröffentlichungsnummer: WO 1999/061527

(56) Entgegenhaltungen:
- EP-A- 0 626 424
- EP-A- 0 819 734
- EP-A- 0 893 478
- WO-A-96/17019
- WO-A1-91/05013
- DD-A- 133 257
- DD-A- 146 716
- WOEBCKEN W.: 'Kunststofflexikon', 1998, CARL HANSER VERLAG, MÜNCHEN, WIEN * Seite 178 - Seite 179 * * Seite 363 *
- 'Ullman's Encyclopedia of Industrial Chemisty, A 11', * Seite 394 - Seite 427 *

## Beschreibung

Die Erfindung bezieht sich auf die Gebiete der Chemie, des Maschinenbaus und der Werkstofftechnik und betrifft Compounds aus Polyamid- und Perfluoralkylsubstanz(en) und Mischungen dieser Compounds mit weiteren Polymersubstanzen, die beispielsweise als Kompaktsubstanz, als Oberflächenmodifizierungskomponente, als Blendkomponente, als Zusatzstoff oder als Additiv in Gleitlagermaterialien, in Gleitfilmen, in Gleitfolien, in Gleitlacken, in oleophoben und/oder hydrophoben oder damit ausgerüsteten Teil- oder Kompaktmaterialien, in Formteilen, in textilen Faden-, Vlies- und/oder anderen textilen Flächengebilden, in Membranmaterialien, als Lackadditiv oder als Lacksubstanz eingesetzt werden können, sowie ein Verfahren zu ihrer Herstellung und Verwendung.

"Bei der Suche nach geeigneten Polymermaterialien für den Kernreaktorbau wurde festgestellt, daß PTFE - im Gegensatz zu seiner hohen chemischen und thermischen Stabilität - außerordentlich strahlenempfindlich ist. Es wird sowohl unter inerten Bedingungen als auch in Gegenwart von Sauerstoff schon bei geringer Energiedosis abgebaut, bereits bei 0,2 bis 0.3 kGy spröde und bei < 100 kGy bröckelig Ab etwa 360°C wird der rein strahlenchemische Abbau merklich von einem thermischen überlagert....
Wegen des stochastischen Verlaufs des strahlenchemischen Abbaus entstehen Reaktionsprodukte mit einem breiten Kettenlängenspektrum....
Bei Bestrahlung von PTFE in Gegenwart von Sauerstoff werden aus den zunächst entstehenden Perfluoralkylradikalen Peroxy- und Alkoxyradikale gebildet...
Über die Zwischenstufe der Bildung des Alkoxyradikals wird das endständige Perfluoralkylradikal unter Kettenverkürzung und Bildung von Carbonyldifluorid schrittweise abgebaut...
Dagegen entstehen aus den seitenständigen Alkoxyradikalen Perfluoralkansäurefluoride und endständige Perfluoralkylradikale ... 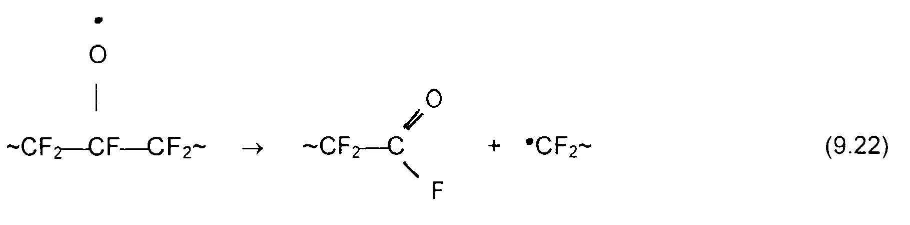 ... In sehr geringen Mengen werden auch perfluorierte Disäuren gebildet, da an einer Perfluorcarbonkette auch zwei seitenständige Radikalzentren entstehen können... Ungesinterte und unverpreßte PTFE-Emulsions- und -Suspensionspolymerisate sind von faserig-filzigem Charakter. Eine Übertragung z. B. der antiadhäsiven und Gleiteigenschaften des PTFE auf andere Medien durch Einarbeitung in wäßrige oder organische Dispersionen, Polymere, Farben, Lacke, Harze oder Schmierstoffe ist nicht möglich, weil dieses PTFE sich nicht homogenisieren läßt, sondern zur Klumpenbildung neigt, agglomeriert, aufschwimmt oder sich absetzt.
Durch die Einwirkung energiereicher Strahlung mit einer Energiedosis von etwa 100 kGy wird aus den faserig-filzigen Polymerisaten infolge partiellen Abbaus der Polymerketten ein rieselfähiges Feinpulver erhalten. Dieses Pulver enthält noch lockere Agglomerate, die leicht zu Primärteilchen mit < 5 µm Partikeldurchmesser zerteilt werden können. Bei Bestrahlung in Gegenwart von Reaktanten werden funktionelle Gruppen in das Polymere eingebaut. Erfolgt die Bestrahlung in Luft, so werden nach Gl. (9.22) (und anschließender Hydrolyse der -COF-Gruppen durch Luftfeuchtigkeit) Carboxylgruppen erhalten. Wird vor der Bestrahlung (NH₄)₂SO₃ zugemischt, dann sind S-haltige Gruppen zu erzielen. Diese funktionellen Gruppen mindern die Hydrophobie und Organophobie des PTFE so wesentlich, daß die gewonnenen Feinpulver gut mit anderen Medien homogenisiert werden können. Die positiven Eigenschaften des PTFE, wie die exzellenten Gleit-, Trenn- und Trockenschmiereigenschaften sowie die hohe chemische und thermische Stabilität, bleiben erhalten. Carboxyl- und Sulfogruppen, an die perfluorierte Kette gebunden, besitzen ebenfalls hohe chemische Inertheit....
Wegen der Unlöslichkeit des PTFE und seiner Abbauprodukte (mit Ausnahme der sehr niedermolekularen Produkte) können die üblichen Methoden der Molmassenbestimmung nicht angewandt werden. Die Molmassenbestimmung muß auf indirektem Wege erfolgen." [A. Heger et al., Technologie der Strahlenchemie an Polymeren, Akademie-Verlag Berlin 1990]
Nachteilig wirkt sich vielfach die Unverträglichkeit mit anderen Materialien aus. Durch eine chemische Aktivierung von PTFE durch die bekannten Verfahren mit (1.) Natriumamid in flüssigem Ammoniak und (2.) Alkalialkyl- und Alkali-Aromaten-Verbindungen in aprotischen inerten Lösungsmitteln ist eine Modifizierung zu erreichen. Über diese Modifizierungen können reaktiv oder auch nur über adsorptive Kräfte verbesserte Grenzflächenwechselwirkungen erreicht werden.

Die Verwertung der Produkte des PTFE-Abbaus erfolgt in vielfältigen Einsatzgebieten - so auch als Additiv zu Kunststoffen zum Zwecke der Erzielung von Gleit- oder Antihafteigenschaften. Die Feinpulversubstanzen liegen mehr oder minder fein dispergiert als Füllstoffkomponente in einer Matrix vor [Ferse et al., Plaste u. Kautschuk, 29 (1982), 458; Ferse et al. DD-PS 146 716 (1979)]. Beim Lösen der Matrixkomponente ist das PTFE-Feinpulver eliminierbar bzw. wird zurückerhalten.

EP-626 424 offenbart Blends aus Polyamiden und teilfluorierten Polymeren.

Obwohl in den Einsatzgebieten von PTFE-Feinpulver eine Verbesserung der Eigenschaften im Vergleich zu den kommerziellen fluorcarbonfreien Additiven erreicht wird, ist die Unverträglichkeit, die Unlöslichkeit, die lockere Kopplung und auch inhomogene Verteilung für viele Einsatzgebiete von Nachteil.

Die Aufgabe der Erfindung ist die Verbesserung der Homogenisierung von Perfluoralkylsubstanzen in Polyamidschmelzen.

Die Aufgabe wird durch die in den Ansprüchen angegebene Erfindung gelöst. Weiterbildungen sind Gegenstand der Unteransprüche.

Mit der vorliegenden Erfindung werden Compounds aus Polyamid- und Perfluoralkylsubstanzen und Mischungen dieser Compounds mit weiteren Polymersubstanzen über eine reaktive Schmelzemodifizierungsreaktion erhalten, in dem die Perfluoralkylkomponente nicht nur als Füllstoff homogen verteilt, sondern größtenteils mit der Polyamidkomponente chemisch gebunden vorliegt. Über das Lösen der Polyamidmatrixkomponente kann die Perfluoralkylkomponente nicht mehr oder nicht mehr vollständig als Feinpulver zurückgewonnen werden.

Durch Einsatz/Verarbeitung von modifizierten Perfluoralkylsubstanzen in dieser Schmelzemodifizierungsreaktion mit Polyamid-Verbindungen sind homogene Compounds direkt herstellbar, in denen nicht wie bekannt die Perfluoralkylkomponente als unlösliche und unverträgliche Zweitkomponente eingelagert ist. Die Perfluoralkylkomponente liegt größtenteils mit dem Polyamid chemisch über Bindungen gekoppelt homogen verteilt vor, was für die Anwendungsgebiete einen wesentlichen Vorteil darstellt. Die Perfluoralkylkomponente kann demzufolge nicht mehr wie bei Gleitlagermaterialien bisher über mechanische Kräfte wie Reibung als Korn aus dem Matrixmaterial herausgerieben oder herausgezogen werden.

Zur Herstellung solcher homogenen Compounds werden modifizierte Perfluoralkylsubstanzen mit Carbonsäure- und/oder Carbonsäurehalogenid- und/oder Perfluoralkylen Gruppen als funktionelle Gruppen eingesetzt.
Bevorzugt verwendet werden strahlenchemisch abgebaute und modifizierte Perfluoralkylsubstanzen, wie z.B. das PTFE-Feinpulver, die mit einer Strahlendosis von größer 50 kGy, vorzugsweise mit einer Strahlendosis von größer 100 kGy hergestellt wurden. Durch die Gegenwart von Reaktanten, vorzugsweise unter Sauerstoffeinfluß, werden beim strahlenchermischen Abbau modifizierte Perfluoralkylsubstanzen erhalten, die vorzugsweise mit Perfluoralkylcarbonsäure- und Perfluorcarbonsäurefluorid-Gruppen modifiziert vorliegen.

Im Verfahren zur Herstellung solcher Compounds werden kommerzielle Schmelzemischer (Ein- und Doppelschneckenextruder, Planetwalzenextruder, Kneter, Plastifiziereinheiten von Spritzgießmaschinen etc.) eingesetzt. Das PTFE-Feinpulver kann entweder zusammen mit der Polyamidsubstanz aufgeschmolzen oder direkt in die Schmelze zugegeben werden. Es werden 0,01 bis 90 Masse-% an strahlenmodifizierter Perfluoralkylsubstanz, vorzugsweise als PTFE-Feinpulver (bezogen auf die Polyamidkomponente) zudosiert. Als bevorzugte Massenanteile werden 1 bis 70 Masse-% an PTFE-Feinpulver in die Polyamidkomponente eingearbeitet. Die erfindungsgemäßen Produkte entstehen überraschenderweise direkt in der Schmelzemodifizierungsreaktion, obwohl nach dem Stand der Technik die an perfluorierte Ketten gebundenen Gruppen eine hohe Inertheit besitzen sollen. Die reaktive Umsetzung in einer Schmelze wird bei Temperaturen mindestens über dem Schmelzpunkt der Polyamidverbindung(en) und vorzugsweise höher als 200°C durchgeführt wird.

Zur Herstellung eines solchen erfindungsgemäßen Compounds werden als Polyamidsubstanz(en) aliphatische und/oder teilaromatische Homo- und/oder Copolyamide und/oder Polyesteramide und/oder Polyetheramide und/oder Polyesteretheramide und/oder Polyimidamide und/oder Polyamidamine eingesetzt sowie Gemische dieser Polyamidverbindung(en) mit weiteren Polymeren und modifizierten Perfluoralkylsubstanz(en) eingesetzt.
Als Polyamidverbindungen werden vorzugsweise Polyamid 6 und/oder Polyamid 6,6 und/oder Polyamid 12 in reiner Form oder als gefüllte und/oder verstärkte Materialien eingesetzt.
Im Gemisch kann/können die Polyamidverbmdung(en) mit weiteren Polymeren wie Polyolefin(en) und/oder Polyvinylverbindung(en) und/oder Polykondensat(en) wie Polyestern und Polycarbonaten und/oder Polyadditionsverbindung(en) wie Polyurethane, eingesetzt werden Dabei konnen solche Gemische auch als Ausgangsstoff eingesetzt oder während der Compoundierung zugesetzt oder nach der Compoundierung der Schmelze zugesetzt oder in einem Folgeschritt umgesetzt werden.

Ein solcher Folgeschritt wäre beispielsweise das Blenden des oder der gebildeten Compounds aus Polyamidverbindung(en) und Perfluoralkylsubstanz(en) mit weiteren Polymeren vom Polyolefin-Typ und/oder vom Vinyl-Typ und/oder mit Polykondensat(en) und/oder mit Polyadditionsverbindung(en) und/oder die Zumischung von reaktiven Massen in einem nachfolgenden Verarbeitungsschritt.

Die Herstellung von Compounds und Folgeprodukten kann dabei in einem ein- oder mehrstufigen Verfahren erfolgen, wobei der Compound oder ein Folgeprodukt davon während des Verfahrens oder anschließend noch reaktiv umgesetzt werden kann.

Vor und/oder während und/oder nach (d.h. in einem Folgeverarbeitungsschritt) der reaktiven Umsetzung der Polyamidverbindungen mit den Perfluoralkylsubstanz(en) kann eine Zumischung an reaktiven Massen erfolgen, die die Bildung des Compounds nicht negativ beeinflussen. Das Produkt aus dieser Umsetzung kann durch eine weitere, d.h. durch eine zusätzliche reaktive Umsetzung während oder nach der Compoundierung z.B. durch Behandlung mit energiereichen Strahlen zum Finalprodukt weiterverarbeitet werden.

Die so hergestellten Compounds können als Kompaktsubstanz und/oder als Oberflächenmodifizierungskomponente und/oder als Blendkomponente und/oder als Verbundwerkstoff und/oder als Additiv angewandt werden.
Der Einsatz erfolgt dabei in Reinsubstanz oder als Zusatz/Bestandteil in Gleitlagern und/oder in Gleitfilmen und/oder in Gleitfolien und/oder in Gleitlacken und/oder in oleophoben und/oder hydrophoben oder damit ausgerüsteten Teil- oder Kompaktmaterialien und/oder in Formteilen und/oder in textilen Faden- und/oder Vlies- und/oder anderen textilen Flächengebilden und/oder in Mehrschicht-(folien-)materialien und/oder in Membranen und/oder als Lackadditiv und/oder als Lacksubstanz.

Die erfindungsgemäßen Produkte können auf Grund ihrer Eigenschaften als Thermoplastschmelze und/oder als reaktive Masse oder als Lösung oder aus der Lösung weiterverarbeitet werden.

Als Verfahrensaggregate eignen sich Kneter, Ein- und Zweischneckenextruder sowie Plastifiziereinheiten von Spritzgießmaschinen, d.h. alle kommerziellen Schmelzemischsysteme, die für die Kunststoffverarbeitung/Compoundierung eingesetzt werden.

Das Ergebnis ist für den Fachmann überraschend und mehr als zufriedenstellend. Mit dieser Schmelzemodifizierungsreaktion wird ein polymeres, bisher noch vollkommen unbekanntes Produkt erhalten. Eine solche Schmelzemodifizierungsreaktion mit perfluorierten Substanzen ist in der Fachwelt noch nicht beschrieben worden.

Im weiteren wird die Erfindung an mehreren Ausführungsbeispielen näher erläutert.

### Beispiel 1

In einem Laborkneter (Firma Brabender) werden bei 250°C 40 g PA 6 plastifiziert und in die Schmelze werden 15 g eines mit 1000 kGy strahlenmodifizierten PTFE-Feinpulvers zugegeben. Der Compound wird nach 5 min eliminiert.
Der Compound wird in Ameisensäure gelöst und auf eine Polyamid-6-Oberfläche aufgesprüht. Durch diese Oberflächenmodifizierung werden dünne hydrophobe und oleophobe Schichten mit einer stark erniedrigten Gleitreibungszahl (Senkung der Gleitreibungszahl um 40 %) erhalten. Die Randwinkelmessungen mit einem aufgesetzten Wassertropfen ergeben eine Erhöhung des Randwinkels von 65° (reines PA-6) auf 95° (Compound).

### Beispiel 2

In einem Laborkneter (Firma Brabender) werden bei 250°C 40 g PA 6 und 15 g eines mit 500 kGy strahlenmodifizierten PTFE-Feinpulvers gleichzeitig plastifiziert. Der Compound wird nach 5 min eliminiert.
Der Compound wird über Mindermengenspritzgießen zu Prüfkörpern für Gleitreibungsuntersuchungen gespritzt. Die Prüfung der Gleitreibungszahl ergab eine Senkung um 35 %. Die Randwinkelmessungen mit einem aufgesetzten Wassertropfen ergeben eine Erhöhung des Randwinkels von 68° (reines PA-6) auf 90° (Compound).

### Beispiel 3

In einem Zweischneckenextruder (ZSK 30, Firma Werner & Pfleiderer) werden 5 kg/h PA-66 und 1 kg/h eines mit 4000 kGy strahlenmodifizierten PTFE-Feinpulvers bei 280°C extrudiert. Das Produkt wird granuliert und getrocknet.
Der Compound wird über Spritzgießen zu Prüfkörpern für Gleitreibungsuntersuchungen gespritzt. Die Prüfung der Gleitreibungszahl ergab eine Senkung um 45 %.

### Beispiel 4

In einem Zweischneckenextruder (ZSK 30, Firma Werner & Pfleiderer) werden 5 kg/h PA-6 und 5 kg/h eines mit 2000 kGy strahlenmodifizierten PTFE-Feinpulvers bei 265°C extrudiert. Das Produkt wird granuliert und getrocknet.
Der Compound wird über Spritzgießen zu Prüfkörpern für Gleitreibungsuntersuchungen gespritzt. Die Prüfung der Gleitreibungszahl ergab eine Senkung um 65 %. Die Randwinkelmessungen mit einem aufgesetzten Wassertropfen ergeben eine Erhöhung des Randwinkels von 65° (reines PA-6) auf 105° (Compound).

### Beispiel 5

In einem Kneter (Firma Buss AG) werden 5 kg/h PA-6 und 7 kg/h eines mit 2000 kGy strahlenmodifizierten PTFE-Feinpulvers bei 250°C schmelzegemischt. Das Produkt wird granuliert und getrocknet.
Das erhaltene Batch wird in einem zweiten Schritt reaktiv mit maleinsäureanhydridgepfropftem Polyethylen im Verhältnis von 10 Masse-% Batch (Compound) und 90 Masse-% Polyethylen geblendet. Nach dem Verspritzen zu Gleitlagern und der strahlenchemischen Vernetzung werden wärmeformstabile Gleitlager erhalten, die eine um 40 % gesenkte Gleitreibungszahl aufwiesen.

### Beispiel 6

In einer Spritzgießmaschine (Firma Engel) werden 5 kg/h PA-6 und 1 kg/h eines mit 4000 kGy strahlenmodifizierten PTFE-Feinpulvers gemeinsam bei 260°C plastifiziert und zu Gleitlagern verspritzt. Die Gleitlager wiesen eine um 45 % gesenkte Gleitreibungszahl auf.

### Beispiel 7

In einem Zweischneckenextruder (ZSK 30, Firma Werner & Pfleiderer) werden 5 kg/h PA-6 und 0,5 kg/h PTFE-Feinpulver bei 260°C extrudiert. Die Schmelze wird on-line zu einer Flachfolie bzw. Gleitfolie extrudiert.
Die Prüfung der Gleitreibungszahl ergab eine Senkung um 45 %. Die Randwinkelmessungen mit einem aufgesetzten Wassertropfen ergeben eine Erhöhung des Randwinkels von 68° (reines PA-6) auf 95° (Flachfolie aus Compound).

### Beispiel 8

In einem Laborkneter (Firma Brabender) werden bei 250°C 30 g PA 6 plastifiziert und in die Schmelze werden 30 g eines mit 1000 kGy strahlenmodifizerten PTFE-Feinpulvers zugegeben. Der Compound wird nach 5 min eliminiert.
Der Compound wird mit PA-6 in einem Verhältnis von 1 : 1 in Ameisensäure gelöst und in einer Konzentration von 15 Masse-% an Polymer eingestellt. Über das Phaseninversionsverfahren wird die Lösung zu Pervaporationsmembran weiterverarbeitet. Die Randwinkelmessungen mit einem aufgesetzten Wassertropfen ergeben eine Erhöhung des Randwinkels von 68° (reines PA-6) auf 90° (Membran aus Compound, dichte Trennschicht), was eine starke Hydrophobierung bedeutet. In der Trennung von Alkohol-Wasser-Gemischen wird bei 30°C eine Erhöhung des Trennfaktors von 120 im Vergleich zu reinen PA-6-Pervaporationsmembranen erreicht.

## Patentansprüche

1. Compounds aus Polyamid(en) und Perfluoralkyl-Verbindung(en) und Mischungen dieser Compounds mit weiteren Polymer(en) **dadurch gekennzeichnet, daß** modifizierte Perfluoralkyl-Verbindung(en) mit funktionellen Gruppen ausgewählt aus einer oder mehreren Carbonsäuregruppe(n) und/oder Carbonsäurehalogenidgruppe(n) und/oder Perfluoralkylengruppe(n), mit Polyamid(en) in Schmelze über eine reaktive Umsetzung homogenisiert sind und die modifizierte(n) Perfluoralkyl-Verbindung(en) im Compound in einem Anteil von 1 bis 90 Masse-% enthalten sind.

2. Compounds nach Anspruch 1, **dadurch gekennzeichnet, daß** die modifizierte(n) Perfluoralkyl-Verbindung(en) im Compound mit einem Anteil von 1 bis 70 Masse-% enthalten sind.

3. Verfahren zur Herstellung eines Compounds nach Anspruch 1, **dadurch gekennzeichnet, daß** aliphatische oder teilaromatische Homo- oder Copolyamide oder Polyesteramide oder Polyetheramide oder Polyesteretheramide oder Polyimidamide oder Polyamidamine oder Gemische dieser Polyamid(e) mit weiteren Polymeren und modifizierte Perfluoralkyl-Verbindung(en) ein- oder mehrstufig compoundiert und dabei oder anschließend in einer Schmelze reaktiv umgesetzt werden.

4. Verfahren nach Anspruch 3, **dadurch gekennzeichnet, daß** Polyamid(e) im Gemisch mit Polyolefin(en) und/oder Polyvinylverbindung(en) und/oder Polykondensat(en) wie Polyestern und Polycarbonaten und/oder Polyadditionsverbindung(en) wie Polyurethane, als Ausgangsstoff eingesetzt oder während der Compoundierung zugesetzt oder nach der Compoundierung der Schmelze zugesetzt oder in einem Folgeschritt mit den Compounds umgesetzt werden.

5. Verfahren nach Anspruch 3, **dadurch gekennzeichnet, daß** als Polyamid(e) Polyamid 6 und/oder Polyamid 6,6 und/oder Polyamid 12 in reiner Form oder als gefüllte und/oder verstärkte Materialien eingesetzt werden.

6. Verfahren nach Anspruch 3, **dadurch gekennzeichnet, daß** die Compoundierung in einem Ein- und/oder Zweischneckenextruder und/oder einem Kneter und/oder einer Plastifiziereinheit einer Spritzgießmaschine durchgeführt wird.

7. Verfahren nach Anspruch 3, **dadurch gekennzeichnet, daß** die reaktive Umsetzung in einer Schmelze bei Temperaturen mindestens über dem Schmelzpunkt der Polyamide und vorzugsweise höher als 200°C durchgeführt wird.

8. Verfahren nach Anspruch 3, **dadurch gekennzeichnet, daß** vor und/oder während und/oder nach der reaktiven Umsetzung eine Zumischung an reaktiven Massen realisiert wird.

9. Verfahren nach Anspruch 3, **dadurch gekennzeichnet, daß** eine weitere reaktive Umsetzung während oder nach der Compoundierung durchgeführt wird.

10. Verfahren nach Anspruch 3, **dadurch gekennzeichnet, daß** als Perfluoralkyl-Verbindung(en) strahlenchemisch abgebaute und modifizierte Perfluorcarbone eingesetzt werden.

11. Verfahren nach Anspruch 10, **dadurch gekennzeichnet, daß** als Perfluoralkyl-Verbindung(en) strahlenchemisch abgebautes und modifiziertes PTFE, bevorzugt als Feinpulver, eingesetzt wird.

12. Verfahren nach Anspruch 10, **dadurch gekennzeichnet, daß** als PTFE ein mit einer Strahlendosis von größer 50 kGy und vorzugsweise mit einer Strahlendosis von größer 100 kGy strahlenchemisch abgebautes und modifiziertes PTFE eingesetzt wird.

13. Verfahren nach Anspruch 10, **dadurch gekennzeichnet, daß** das PTFE in Gegenwart von Reaktanten, vorzugsweise unter Sauerstoffeinfluß strahlenchemisch abgebaut und modifiziert wird.

14. Verfahren nach Anspruch 3, **dadurch gekennzeichnet, daß** die Compounds aus Polyamid(en) und Perfluoralkyl-Verbindung(en) mit weiteren Polymeren vom Polyolefin-Typ und/oder vom Vinyl-Typ und/oder mit Polykondensat(en) und/oder mit Polyadditionsverbindung(en) direkt während der Compoundierung oder in einem nachfolgenden Verarbeitungsschritt in einer Blendbildung umgesetzt und/oder mit reaktiven Massen gemischt werden.

15. Verwendung der Compounds nach Anspruch 1 als Kompaktsubstanz und/oder als Oberflächenmodifizierungskomponente und/oder als Blendkomponente und/oder als Verbundwerkstoff und/oder als Additiv.

16. Verwendung der Compounds nach Anspruch 1 als Reinsubstanz oder als Zusatz/Bestandteil in Gleitlagern oder in Gleitfilmen oder in Gleitfolien oder in Gleitlacken oder in oleophoben und/oder hydrophoben oder damit ausgerüsteten Teil- oder Kompaktmaterialien oder in Formteilen oder in textilen Faden- oder Vlies- oder anderen textilen Flächengebilden oder in Mehrschicht-(folien-)materialien oder in Membranen oder als Lackadditiv oder als Lacksubstanz.

17. Verwendung der Compounds nach Anspruch 1 zur Weiterverarbeitung zu einer Thermoplastschmelze und/oder zu einer reaktiven Masse und/oder zu einer Lösung und/oder aus der Lösung.

## Claims

1. Compounds of polyamide and perfluoralkyl substance(s) and mixtures of these compounds with additional polymer substance(s), **characterized in that** modified perfluoralkyl substance(s) with functional groups selected from one or more carboxylic acid groups and/or one or more carboxylic acid halogenide groups and/or one or more perfluoralkyl groups are homogenized with polyamide compound(s) in a melt by means of a reactive transformation and the modified perfluoralkyl substance(s) are contained in the compound with an amount of 1 to 90 mass-%.

2. Compounds according to claim 1, **characterized in that** the modified perfluoralkyl substance(s) are contained in the compound with an amount of 1 to 70 mass-%.

3. Process for producing a compound according to claim 1, **characterized in that** aliphatic and/or partially aromatic homopolyamides or copolyamides or polyester amides or polyether amides or polyesterether amides or polyimide amides or polyamide amines or mixtures of this/these polyamide compound(s) with additional polymers and modified perfluoralkyl substance(s) are compounded in a single- or multi-level manner and, in so doing or subsequently, are reactively transformed.

4. Process according to claim 3, **characterized in that** polyamide compound(s), in the mixture with polyolefin(s) and/or polyvinyl compound(s) and/or polycondensate(s) such as polyesters and polycarbonates and/or polyaddition compound(s) such as polyurethane, are used as a starting substance or added during the compounding or added to the melt after the compounding or converted with the compounds in a subsequent step.

5. Process according to claim 3, **characterized in that** polyamide 6 and/or polyamide 6,6 an/or polyamide 12 in pure form or as filled and/or reinforced materials are used as polyamide compound(s).

6. Process according to claim 3, **characterized in that** the compounding is performed in a single- and/or double-screw extruder and/or in a kneader and/or in a plasticizing unit of an injection molder.

7. Process according to claim 3, **characterized in that** the reactive transformation is performed in a melt, with the transformation being performed at temperatures at least over the melting point of the polyamide compound(s) and preferably greater than 200 °C.

8. Process according to claim 3, **characterized in that**, before and/or during and/or after the reactive transformation, an addition of reactive masses is realized.

9. Process according to claim 3, **characterized in that** another reactive transformation is performed during or after the compounding.

10. Process according to claim 3, **characterized in that** perfluorcarbons that have been radiochemically decomposed and modified are used as perfluoralkyl substance(s).

11. Process according to claim 10, **characterized in that** PTFE that has been radiochemically decomposed and modified, preferably as a fine powder, is used as perfluoralkyl substance(s).

12. Process according to claim 10, **characterized in that** a PTFE that has been radiochemically decomposed and modified with an absorbed dose of greater than 50 kGy, preferably with an absorbed dose of greater than 100 kGy, is used as the PTFE.

13. Process according to claim 10, **characterized in that** the PTFE is radiochemically decomposed and modified in the presence of reactants, preferably under the influence of oxygen.

14. Process according to claim 3, **characterized in that** the compounds of polyamide compound(s) and perfluoralkyl substance(s) are transformed in a blending formation and/or mixed with reactive masses, directly during compounding or in a subsequent processing step with additional polymers of the polyolefin type and/or of the vinyl type and/or with polycondensate(s) and/or with polyaddition compound(s).

15. Use of compounds according to claim 1, which are used as a compact substance and/or as surface modification components and/or as blending components and/or as a bond material and/or as an additive.

16. Use according to claim 1, which are used in a pure substance or as an addition/component in sliding bearings or in anti-frictional films or in lubricating varnishes or in oleophobic and/or hydrophobic or parts or compact materials equipped therewith or in mouldings or in textile thread or fleece or other textile surface structures or in multi-layer (film) materials or in membranes or as a lacquer additive and/or as a lacquer substance.

17. Use according to claim 1, which are processed further as thermoplastic melts and/or as a reactive mass and/or as a solution and/or from the solution.

## Revendications

1. Compounds d'un ou de plusieurs polyamides et d'un ou de plusieurs composés à base de perfluoroalkyle et mélanges de ces compounds avec un/des autres polymères, **caractérisés en ce que** le ou les composés à base de perfluoroalkyle modifiés avec des groupes fonctionnels choisis parmi un ou plusieurs groupes acide carboxylique et/ou groupes halogénure d'acide carboxylique et/ou groupes perfluoroalkylène sont homogénéisés via une transformation réactive en masse fondue avec un ou plusieurs polyamides et le ou les composés à base de perfluoroalkyle modifiés sont contenus dans le compound en une proportion de 1 à 90% en masse.

2. Compounds selon la revendication 1, **caractérisés en ce que** le ou les composés à base de perfluoroalkyle modifiés sont contenus dans le compound en une proportion de 1 à 70% en masse.

3. Procédé pour la préparation d'un compound selon la revendication 1, **caractérisé en ce que** des homopolyamides ou des copolyamides aliphatiques ou partiellement aromatiques ou des polyesteramides ou des polyétheramides ou des polyesterétheramides ou des polyimidamides ou des polyamidamines ou des mélanges de ce ou ces polyamides sont compoundés en une ou plusieurs étapes avec d'autres polymères et le ou les composés à base de perfluoroalkyle modifiés et sont transformés de manière réactive simultanément ou consécutivement dans une masse fondue.

4. Procédé selon la revendication 3, **caractérisé en ce qu'**on utilise comme substance de départ le ou les polyamides en mélange avec une ou plusieurs polyoléfines et/ou un ou plusieurs composés de polyvinyle et/ou un ou plusieurs produits de polycondensation, tels que les polyesters et les polycarbonates et/ou un ou plusieurs composés de polyaddition, tels que les polyuréthanes ou ceux-ci sont ajoutés pendant le compoundage ou à la masse fondue après le compoundage ou sont transformés dans une étape consécutive avec le compound.

5. Procédé selon la revendication 3, **caractérisé en ce qu'**on utilise comme polyamide(s) du Polyamide 6 et/ou du Polyamide 6,6 et/ou du Polyamide 12 sous forme pure ou sous forme de matériaux chargés et/ou renforcés.

6. Procédé selon la revendication 3, **caractérisé en ce que** le compoundage est réalisé dans une extrudeuse à une et/ou deux vis sans fin et/ou un malaxeur et/ou une unité de plastification d'une machine de moulage par injection.

7. Procédé selon la revendication 3, **caractérisé en ce que** la transformation réactive est réalisée dans une masse fondue à des températures au moins supérieures au point de fusion des polyamides et de préférence supérieures à 200°C.

8. Procédé selon la revendication 3, **caractérisé en ce qu'**on réalise une addition en mélangeant des masses réactives avant et/ou pendant et/ou après la transformation réactive.

9. Procédé selon la revendication 3, **caractérisé en ce qu'**on réalise une autre transformation réactive pendant ou après le compoundage.

10. Procédé selon la revendication 3, **caractérisé en ce qu'**on utilise comme composé(s) à base de perfluoroalkyle des composés perfluorocarbonés dégradés et modifiés chimiquement par des rayons.

11. Procédé selon la revendication 10, **caractérisé en ce qu'**on utilise comme composé(s) à base de perfluoroalkyle du PTFE dégradé et modifié chimiquement par des rayons, de préférence sous forme de poudre fine.

12. Procédé selon la revendication 10, **caractérisé en ce qu'**on utilise comme PTFE un PTFE dégradé et modifié chimiquement par des rayons avec une dose de rayons supérieure à 50 kGy et de préférence avec une dose de rayons supérieure à 100 kGy.

13. Procédé selon la revendication 10, **caractérisé en ce que** le PTFE est dégradé et modifié chimiquement par des rayons en présence de réactifs, de préférence sous l'influence de l'oxygène.

14. Procédé selon la revendication 3, **caractérisé en ce que** les compounds de polyamide(s) et de composé(s) à base de perfluoroalkyle sont transformés avec d'autres polymères du type polyoléfine et/ou du type vinyle et/ou avec un ou plusieurs produits de polycondensation et/ou avec un ou plusieurs composés de polyaddition directement pendant le compoundage ou dans une étape de transformation ultérieure au cours d'une formation de mélange et/ou sont mélangés avec des masses réactives.

15. Utilisation des compounds selon la revendication 1 comme substance compacte et/ou comme composant de modification de surface et/ou comme composant de mélange et/ou comme matériau composite et/ou comme additif.

16. Utilisation des compounds selon la revendication 1 comme substance pure ou comme additif/constituant dans des paliers à glissement ou dans des films à glissement ou dans des feuilles à glissement ou dans des laques à glissement ou dans des matériaux partiels ou compacts oléophobes et/ou hydrophobes ou apprêtés de cette manière ou dans des pièces moulées ou dans des structures textiles à base de fils ou de non-tissés ou d'autres structures planes textiles ou dans des matériaux à plusieurs couches (en feuille) ou dans des membranes ou comme additif de laque ou comme substance de laque.

17. Utilisation des compounds selon la revendication 1 pour la transformation ultérieure en une masse fondue thermoplastique et/ou en une masse réactive et/ou en une solution et/ou à partir de la solution.
